(19) Europäisches Patentamt / European Patent Office / Office européen des brevets

(11) **EP 3 047 325 B1**

(12) **EUROPÄISCHE PATENTSCHRIFT**

(45) Veröffentlichungstag und Bekanntmachung des Hinweises auf die Patenterteilung:
**18.03.2020 Patentblatt 2020/12**

(51) Int Cl.:
**G02B 21/00** *(2006.01)*  **G02B 27/58** *(2006.01)*

(21) Anmeldenummer: **14749822.4**

(86) Internationale Anmeldenummer:
**PCT/EP2014/067069**

(22) Anmeldetag: **08.08.2014**

(87) Internationale Veröffentlichungsnummer:
**WO 2015/039806 (26.03.2015 Gazette 2015/12)**

(54) **LASERSCANNINGMIKROSKOP UND VERFAHREN ZUR KORREKTUR VON ABBILDUNGSFEHLERN BEI EINER LASER-SCANNING-MIKROSKOPIE**

LASER SCANNING MICROSCOPE AND METHOD FOR CORRECTING IMAGING ABERRATIONS IN LASER SCANNING MICROSCOPY

MICROSCOPE À BALAYAGE LASER ET PROCÉDÉ DE CORRECTION D'ABERRATIONS DANS MICROSCOPIE À BALAYAGE LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2013 DE 102013218795**

(43) Veröffentlichungstag der Anmeldung:
**27.07.2016 Patentblatt 2016/30**

(73) Patentinhaber: **Carl Zeiss Microscopy GmbH 07745 Jena (DE)**

(72) Erfinder:
- SINGER, Wolfgang
  73431 Aalen (DE)
- PETSCHULAT, Jörg
  07751 Jena (DE)
- RICHTER, Stefan
  07743 Jena (DE)

(74) Vertreter: **Müller, Silke
Carl Zeiss AG
Patentabteilung
Carl-Zeiss-Promenade 10
07745 Jena (DE)**

(56) Entgegenhaltungen:
WO-A2-2012/102887    US-A1- 2006 124 870
US-A1- 2009 086 200

- Booth J Martin ET AL: "Adaptive Optics for Biomedical Microscopy", OPN Optics & Phtonics News, 1. Januar 2012 (2012-01-01), Seiten 22-29, XP055140038, Gefunden im Internet: URL:http://www.opticsinfobase.org/opn/abstract.cfm?uri=opn-23-1-22 [gefunden am 2014-09-12]
- IZEDDIN: "PSF shaping using adaptive optics for three-dimensional single-molecule super-resolution imaging and tracking", OPTICS EXPRESS, Bd. 20, Nr. 5, 1. Januar 2012 (2012-01-01), Seite 4957, XP055052832, ISSN: 1094-4087, DOI: 10.1364/OE.20.004957
- DELPHINE DÉBARRE ET AL: "Image-based adaptive optics for two-photon microscopy", OPTICS LETTERS, OPTICAL SOCIETY OF AMERICA, US, vol. 34, no. 16, 15 August 2009 (2009-08-15), pages 2495-2497, XP001547260, ISSN: 0146-9592, DOI: 10.1364/OL.34.002495

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Laserscanningmikroskop und ein Verfahren zur Korrektur von Abbildungsfehlern bei einer Laser-Scanning-Mikroskopie.

Aus dem Stand der Technik sind verschiedene Ansätze bekannt, die laterale und axiale Auflösung solcher Scanningmikroskope auch über die Beugungsgrenze des Beleuchtungslichtes hinweg zu erhöhen und dabei Abbildungsfehler zu korrigieren.

Zunächst wurde mit der konfokalen Scanningmikroskopie eine deutliche Kontrast- und Auflösungsverbesserung erreicht. Hierbei wird ein Laser für die Beleuchtung eingesetzt, der in der Fokusebene ein Objekt beleuchtet und dort in jedem Punkt Fluoreszenzmoleküle anregt. Das Fluoreszenzlicht wird auf eine Blende (Pinhole) in der Bildebene abgebildet, wobei nur das Licht, das direkt aus der Fokusebene kommt, detektiert wird. Mit der konfokalen Abbildung kann die laterale Auflösung (die immer noch beugungsbegrenzt ist) um den Faktor 1,4 größer gegenüber der konventionellen Mikroskopie sein. Dies ist abhängig von der Größe der Lochblende. Deshalb muss hier die Größe der Lochblende auf die Größe des abzubildenden Spots optimiert werden. Eine zu kleine Lochblende verringert die Menge des nützlichen Lichts, eine zu große Blende lässt zu viel Licht außerhalb der Fokusebene und zu viel Streulicht zu.

Verfahren wie I$^n$M und 4Pi Mikroskopie verbessern die axiale Auflösung durch die Verwendung zweier Objektive mit hoher numerischer Apertur und die Überlagerung der Bilder in der Detektorebene entweder durch eine Weitfeld- oder konfokale Laser-Fluoreszenz-Konfiguration, bzw. durch die Verwendung mehrerer Anregungslichtquellen, bei denen durch Interferenzen Muster auf die Probe projiziert werden. Die laterale Auflösung bleibt hierbei unverändert.

Weitere scannende hochauflösende Verfahren sind die RESOLFT-Mikroskopie (reversible saturable optical (flurorescence) transitions), bei der man besonders scharfe Bilder erhält. Trotz Verwendung herkömmlicher Objektive und gebeugter Strahlen wird eine Auflösung weit jenseits der Beugungsgrenze bis herunter auf die molekulare Skala erhalten. Die RESOLFT-Mikroskopie überwindet diese Beugungsgrenze, indem sie die Farbstoffe vorübergehend in einen Zustand schaltet, in dem sie nicht in der Lage sind, nach Beleuchtung mit einem (Fluoreszenz-) Signal zu antworten.

Mit dem PALM (Photoactivated Localization Microscopy) - Verfahren oder STORM (Stochastic Optical Reconstruction Microscopy)-Verfahren sind spezielle Methoden der nicht scannenden Lichtmikroskopie, genauer der Fluoreszenzmikroskopie bekannt. Sie beruhen auf einem lichtgesteuerten Ein- und Ausschalten von Fluoreszenz in einzelnen Molekülen. Das Ein- und Ausschalten erfolgt dabei über einen gewissen Zeitraum hinweg, über den mehrere einzelne Bilder aufgenommen werden können. Durch eine anschließende Computerberechnung lässt sich die Position einzelner Moleküle mit einer Auflösung jenseits der von Ernst Abbe beschriebenen optischen Auflösungsgrenze bestimmen. Ein solches Verfahren ist beispielsweise in IZEDDIN: "PSF shaping using adaptive optics for three dimensional single-molecule super-resolution imaging and tracking", OPTICS EXPRESS, Bd. 20, Nr. 5, 1. Januar 2012 beschrieben. Anderer relevanter Stand der Technik ist in BOOTH: "Adaptive Optics for Biomedical Microscopy", OPN Optics and Photonics News, 1. Januar 2012, S. 22-29 und DEBARRE: "Image-based adaptive optics for two-photon microscopy", Optics Letters, Bd. 34, Nr. 16, 15. August 2009, S. 2495-2497 veröffentlicht.

Aus der EP 2 317 362 A1 ist ein Mikroskopverfahren mit gesteigerter Auflösung bekannt, bei welchem die Beleuchtung bzw. das Beleuchtungsmuster mit einer Genauigkeit, die über der erreichbaren optischen Auflösung liegt, gegen die Detektion verschoben wird und während der Verschiebung mehrere Bilder aufgenommen und ausgewertet werden.

Es ist weiterhin seit langem bekannt, eine adaptive Optik, also optisch wirksame Baugruppen zur Wellenfrontmodulation zu verwenden. Die adaptive Optik verändert die Phase und/oder die Amplitude des Lichtes gezielt derart, dass sowohl eine Verschiebung und Formung des Fokus im Objektraum, als auch eine Korrektur von eventuellen Aberrationen bewirkt werden kann. Ein axiale Verschiebung des Fokus wird erreicht durch eine Veränderung an der Wellenfront. Dabei entspricht eine axiale Verschiebung des Fokus einer sphärischen Veränderung der Wellenfront, eine laterale Verschiebung einer Kippung der Wellenfront. Aberrationen im Strahlengang werden ebenfalls durch Veränderung der Wellenfront ausgeglichen. Diese Manipulationen werden in einer Pupillenebene des Strahlengangs mit Hilfe deformierbarer Spiegel vorgenommen.

Solche adaptiven Optiken sind beispielsweise in der EP 1 253 457 B1, der US 7 224 23 B2 oder der JP 2008 026643 A beschrieben.

Der Einsatz adaptiver Optik zur Korrektur von z.B. probeninduzierten Wellenfrontfehlern (inklusive Wellenfrontfehler, die durch den Probenträger und das Immersionsmedium kommen), ist aus einer Vielzahl von Veröffentlichungen bekannt.

Problem bei dem Einsatz der adaptiven Optik ist immer, dass ein Steuersignal für die adaptive Optik benötigt wird. Man muss also zunächst den Wellenfrontfehler bestimmen, bevor man ihn wegstellen kann. Im Allgemeinen ist der Wellenfrontfehler nicht bekannt.

Im Stand der Technik existieren zwei Lösungsansätze: Bei der ersten Lösung bringt man ein zusätzliches Messsystem in das Mikroskop, um den Wellenfrontfehler direkt zu messen, z.B. durch einen üblichen und bekannten Shack-Hartmann Sensor. Die US 2004/0223214 A1 zeigt beispielsweise ein Mikroskop mit einem Hartmann-Shack-Wellenfrontsensor. Aus der Form der Wellenfront sind die Aberrationen bestimmbar, die durch die Streuung des Lichtes an der Probe verursacht werden. Je nach Leistungsfähigkeit (Korrekturfreiheitsgrade des Korrekturelements) können so verschiedene Effekte korrigiert werden. Bei Elementen mit sehr vielen Freiheitsgraden wie z.B. einen SLM (spatial light modulator) entspricht dies der Anzahl der ansteuerbaren Pixel. Mit solchen Elementen können nicht nur Aberrationen (langsam veränderliche Wellenfronten) des Systems und der Probe, sondern auch hochfrequente Anteile (Streulicht) korrigiert werden, sofern diese am Wellenfrontsensor noch gemessen werden können. In einem bestimmten Bildausschnitt, je nach Scanposition, wird so diese, u.U. sehr hochfrequente Wellenfront, am Element korrigiert. Damit kann die beugungsbegrenzte Performance des Systems auch in Medien oder streuenden Proben und insbesondere auch für nicht-verschwindende Systemaberrationen des Mikroskops erreicht werden.

Als Konsequenz muss man wertvolle und nur in endlicher Zahl verfügbare Photonen für einen Sensor verwenden, diese Photonen stehen nachher für die eigentliche Messung nicht mehr zur Verfügung.

Bei der zweiten Lösung bestimmt man den Wellenfrontfehler iterativ aus dem LSM-Signal direkt, d.h. man optimiert den Wellenfrontfehler so lange, bis das LSM-Signal optimal wird. Hierbei benötigt man eine große Anzahl von Iterationszyklen, in der Literatur wird von 10 bis 30 Zyklen berichtet.

Fluorophere bleichen aus und können nur ca. 50000 Photonen aussenden. In beiden Lösungen aus dem Stand der Technik besteht also der Nachteil, dass viele der wenigen Photonen zur Ermittlung des Ansteuersignals für den adaptiven Spiegel "geopfert" werden müssen.

In den herkömmlichen Scanningmikroskopen (außer STED) erfolgt prinzipbedingt immer eine beugungsbegrenzte Abbildung des (idealerweise punktförmigen) Spots als sogenanntes Airy-Scheibchen, welches durch eine Punktantwort oder Punktbildfunktion, auch Punktbild (engl. point spread function - PSF) bestimmt ist. Die PSF gibt an, wie ein idealisiertes, punktförmiges Objekt durch ein System abgebildet wird. Problematisch ist, dass entsprechende Sensoren bzw. Detektoren, welche im Sub-mm-Bereich die gewünschte Auflösung der Airy-Scheibchen abbilden könnten, derzeit nicht verfügbar sind und andere Techniken entweder sehr teuer oder sehr langsam sind und sich damit für eine kommerzielle Nutzung nicht eignen.

In der herkömmlichen Scanning-Mikroskopie wird dabei der Abbildungsspot pixelweise ausgewertet, d.h. für jede Spotposition wird genau ein Pixel ausgewertet, bzw. resultiert aus jeder Spotposition ein Pixel des Gesamtbildes. Dabei wird lediglich die vom Detektor insgesamt aufgenommene Strahlungsintensität (integral) bestimmt und in Graustufen konvertiert. Ggf. kann bei kleineren Scanning-Schritten eine entsprechende Pixel- bzw. Informations-Überlagerung erfolgen. Eine Kontrastverbesserung kann hier durch Erhöhung der Graustufenauflösung (Farbtiefe) erreicht werden. Die verwendeten PMT's oder PMT-Arrays (Photo Mulitplier Tube) weisen bei bestimmten Verstärkungsraten ein internes Rauschen auf, so dass die Signalqualität abnimmt.

Bei all diesen Lösungen tritt typischerweise das Problem auf, dass die Abweichungen an verschiedenen Stellen der Probe und mit verschiedenen Fokuspositionen variieren. Diese sind zumeist nicht bekannt bzw. müssen durch aufwendige Messungen bestimmt werden.

Wegen der begrenzten Photonenausbeute bei der Fluoreszenzmikroskopie ist eine zusätzliche Messung der tatsächlichen PSF bisher nicht (bzw. nur in der Weitfeldmikroskopie) üblich.

In einem Laserscanningmikroskop kann die theoretische PSF gestört sein durch verschiedene Abweichungen des Systems vom Idealzustand oder der zu beobachtenden Probe. Dadurch wird das Signal störanfällig (Rauschen, Signal-Rausch-Verhältnis, ...) und die maximale Auflösung reduziert.

Der Erfindung liegt nunmehr die Aufgabe zugrunde, ein Scanningmikroskop und ein Verfahren zur ortsabhängigen Abweichungskorrektur in dem vorzugsweise hochaufgelösten Scanningmikroskop zu schaffen.

Die Aufgabe wird durch ein Laserscanningmikroskop mit den Merkmalen des Anspruchs 1 und durch ein Verfahren mit den Merkmalen des Anspruchs 6 gelöst.

Vorteilhafte Abwandlungen und Ausführungsbeispiele sind in den Unteransprüchen angegeben.

Die Aberrationen hängen von verschiedenen Einflussgrößen ab. Die Aberrationen der Optik eines Scanningmikroskops sind bekannt und können entsprechend korrigiert werden. Proben- und umgebungsabhängige Brechzahlschwankungen, Temperaturschwankungen und unterschiedliche Deckglasdicken variieren dahingehend pro Probe, sind aber pro Probe weitgehend konstant. Eigenschaften typischer biologischer Proben sind oftmals lokal nur langsam variierend. Ausnahme hierfür ist die Bildgebung in tiefen Proben, wo durch Streuung eine stärkere Ortsabhängigkeit vorliegt und damit ein größerer Korrekturaufwand notwendig ist.

Die vorliegende Erfindung löst das genannte Problem. Das SR-LSM-Signal (SR-LSM: engl. Super Resolution-Laser Scanning Microscope) enthält anders als ein gewöhnliches LSM-Signal nicht nur die Photonenzahl, sondern auch Informationen über die laterale Intensitätsverteilung der PSF.

Das Integral über die am Detektor gemessene Intensität gibt Auskunft über den Grauwert am Ort (Scanning-Position x,y), der durch die Einstellung am Scanspiegel realisiert wird.

Die Form bzw. laterale Auflösung der PSF kann nun genutzt werden, um die Aberrationen, die die Abweichungen der gemessenen zur idealen PSF ohne Aberrationen darstellen, im System zu bestimmen und in einer bevorzugten Ausführungsform über ein Element (adaptive Optik) zu korrigieren. Dazu werden die Signale der Einzeldetektoren des Detektorarrays ausgewertet. In alternativen Ausführungsformen ist die Korrektur auch mittels digitaler Nachbearbeitung des Mikroskopbildes softwaretechnisch, z.B. mittels Entfaltung umsetzbar.

Die so ermittelte PSF enthält also zusätzlich die Information über die Wellenfrontfehler. Somit kann idealerweise aus der PSF auf den Wellenfrontfehler geschlossen werden. Dies kann rein rechnerisch erfolgen, d.h. man iteriert einen angenommenen Wellenfrontfehler so lange, bis die berechnete PSF der gemessenen PSF ähnlich ist. Mit dem auf diese Weise rechnerisch ermittelten Korrekturwert steuert man in der bevorzugten Ausführungsform den adaptiven Spiegel an. Im Idealfall ist dann bereits bei der zweiten Messung der Wellenfrontfehler korrigiert. Benachbarte Feldpunkte haben stets ähnliche Wellenfrontfehler, so dass die zweite Messung bereits an einem benachbarten Feldpunkt (Scanning-Position) erfolgen kann. Die dann gemessene PSF kann aufgrund der leicht ortsveränderlichen Wellenfrontfehler von der idealen PSF abweichen, aus dieser kleinen Abweichung kann erneut rechnerisch eine leicht angepasste Wellenfrontkorrektur berechnet werden.

Bei der nächsten Scanning-Position wird dann mit der leicht korrigierten Wellenfrontkorrektur gemessen. In iterativer Fortsetzung des Verfahrens folgt somit, dass keine Photonen für die Signalgenerierung zur Ansteuerung der adaptiven Optik "geopfert" werden müssen und die vorliegenden langsam veränderlichen Wellenfrontfehler trotzdem korrigiert werden können.

Ein erfindungsgemäßes Laserscanningmikroskop umfasst zunächst in bekannter Weise und Anordnung die Komponenten Beleuchtungseinrichtung, Scanner, adaptive Optik und Detektor.

Das Laserscanningmikroskop umfasst also eine Beleuchtungseinrichtung zur Bereitstellung eines Beleuchtungsspots, einen Scanner zum Bewegen des Beleuchtungsspots über eine zu untersuchende Probe an aufeinanderfolgenden Scanning-Positionen, eine adaptiven Optik zur Beeinflussung einer Wellenfront des Beleuchtungsspots mit einer Regelvorrichtung und einen Detektor zur Erfassung eines von der Probe emittierten ortsaufgelösten Abbildungsspots.

Erfindungsgemäß umfasst der Detektor eine Auswerteeinheit zur Bestimmung einer Point-Spread-Funktion (PSF$_{Abb}$) des Abbildungsspots in jeder Scanning-Position. Dabei wird die Point-Spread-Funktion der aktuellen Scanning-Position ausgehend von der aktuellen, einer oder mehreren vorangegangenen oder benachbarten Scanning-Position ausgewertet, um mit einer Regelvorrichtung die adaptive Optik zu steuern.

Die Besonderheit am Detektor ist nun, dass dieser einen Abbildungsspot sehr schnell in jeder Scanning-Position tatsächlich ortsaufgelöst erfasst. Das heißt, dass aus der zweidimensionalen Abbildung des Airy-Scheibchens des Abbildungsspots mittels einer geeignete Auswertung die zu dieser PSF gehörende Wellenfront bestimmt wird. Da die ideale PSF bekannt ist, können daraus nicht nur eine Lichtausbeute (wie bisher), sondern auch Aberrationen wie beispielsweise Defokus, Koma, Astigmatismus für jede Scanning-Position extrahiert werden.

Die Auflösungssteigerung am LSM mit diesem speziellen Detektor lässt sich mit der Gesamt-PSF des LSM Systems erklären, die maßbeglich an der Bildentstehung beteiligt ist. Diese berechnet sich aus dem Produkt der Anregungs-PSF und der mit der Transferfunktion des Pinholes gefalteten Detektions-PSF

$$PSF_{gesamt}(x,y) = PSF_{Beleuchtung}(x,y) \cdot [PSF_{Detektion}(x,y) \otimes T_{Pinhole}(x,y)].$$

Die maximale Auflösung wird erreicht, wenn die Transferfunktion des Pinholes einer Delta Funktion entspricht. Dann wird die maximale Auflösung erreicht. Bei dieser Transferfunktion geht aber kaum Licht durch den Detektor. Daher wird in der Anwendung immer ein ausgedehntes Pinhole verwendet, um genügend Photonen für ein entsprechendes Signal zu Rausch Verhältnis zu realisieren. Damit geht allerdings immer ein Auflösungsverlust einher. Beim SR LSM sitzt an der Stelle des konfokalen Pinholes der Array Detektor. Jeder Pixel des Detektorarrays entspricht einem sehr kleinen Pinhole. Trotzdem wird insgesamt kein Licht abgeblendet. Aus der Auswertung der Intensitäten am jedem Pixel kann nun die maximale Auflösung des Detektors verbessert werden. Diese Vorgehensweise wird in der nicht vorveröffentlichten DE 10 2012 204 128 A1 erläutert.

Wichtig für den Algorithmus zur Extraktion der Korrekturwellenfront ist dabei lediglich die Pixel- bzw. ortsaufgelöste PSF.

Um in dieser Größenordnung eine Sub-Pixel-Auflösung zu erreichen, wird der Abbildungsspot mittels eines optischen Umlenkelementes, das den Abbildungsspot in Subpixel unterteilt (Faseroptik, Mikrospiegelarray), einem Detektorarray (PMT-Array) zugeführt.

Vorzugsweise ist der Detektor ein Array aus Einzeldetektoren. Besonders geeignet sind PMT's (Photomultiplier Tubes) oder APD's (Avalanche Photodiode). Die einzelnen Tubes der PMT's haben einen Durchmesser von etwa 0,8 bis 2 mm. Es gibt Ausführungsformen mit 8, 16, 32, 64 und mehr Kanälen (Tubes). Bei der Anordnung im Array ist ein mit den Mikrokanalplatten (MCP) vergleichbarer Abstand zwischen den Tubes vorhanden.

Das optische Umlenkelement weist vorzugsweise nur sehr kleine Abstände zwischen den Einzelelementen (Lichtleitfasern, Mikrospiegel) auf, wodurch die Bildinformationen des Abbildungsspots besser aufgelöst werden können. Die Lichtmengen dieser Einzelelemente werden dann den Eingängen der Einzeldetektoren direkt zugeführt.

Ein besonders bevorzugtes Umlenkelement weist an dessen Eingang ein Bündel von Lichtleitfasern (alterativ ein Array von unterschiedlich neigbaren Mikrospiegeln, Facettenspiegel, DMD oder adaptiven Spiegel) auf, die in einem (nahezu) kreisförmigen Querschnitt dicht gepackt angeordnet sind. Der Querschnitt muss dem Abbildungsspot angepasst sein. Je nach verwendetem Detektorarray ist die Anzahl der Einzelelemente auszuwählen. Vorteilhafterweise kann ein 9x9 PMT-Array verwendet werden.

Ein Ausgang des Umlenkelementes ist dazu ausgebildet, die Lichtmengen der Einzelelemente den Einzeldetektoren zuzuführen.

Mithilfe des erfindungsgemäß zweidimensional aufgelösten Airy-Scheibchens können Aberrationen (auch solche höherer Ordnung) ermittelt werden und die Bilddarstellung an die ideale $PSF_{ideal}$ angepasst (korrigiert) werden.

Vorzugsweise können die Informationen des Airy-Scheibchens direkt bzw. nach Integration in eine entsprechende Regelschleife zur Ansteuerung der adaptiven Optik an die nächsten Scan-Position verwendet werden, um durch die Probe verursachte optische Aberrationen damit auszugleichen.

Dabei ist ausschlaggebend, dass für jede Scanposition der in einem Einzelbild erfasste Abbildungsspot mit einer Ortsauflösung erfasst wird, welche unter Berücksichtigung des Abbildungsmaßstabes mindestens doppelt so groß ist, wie eine Halbwertsbreite des beugungsbegrenzten Einzelbildes.

Erfindungsgemäß erfolgt die Anwendung einer adaptiven Optik in Synchronisation mit dem Scanning-System. Es wird also für jeden Scanning-Position durch die Anwendung einer bestimmen Korrekturfunktion eine lokale Abweichung kompensiert. Dadurch wird die PSF verbessert, was wiederum zu einem verbesserten Signal-Rausch-Verhältnis führt. Damit verfügt man über die im Weitfeld nicht vorhandene Möglichkeit, auch ortsabhängige Aberrationen durch die Korrektur der Wellenfront in jeder Feld (Scanning-)Position zu erfassen.

Die Vorteile der Erfindung sind insbesondere darin zu sehen, dass eine schnelle Intensitätsmessung über den neuartigen Detektor (SR-LSM) möglich ist. Dies bietet die einzigartige Möglichkeit, eine schnelle Messung der PSF für eine Scaneinstellung zu realisieren. Dabei kann die Korrektur der Wellenfront sofort erfolgen ('on the fly'), oder beispielsweise auch in einem Postprozess (nachträgliche Entfaltung mit der gemessenen PSF). Für beide Methoden ist es wichtig, die PSF zu kennen.

Das Signal des Detektors wird verwendet, um die Abweichungen der gemessenen $PSF_{Abb}$ von einer idealen PSF an jeder Scanning-Position zu bestimmen und zur Korrektur zur Verfügung zu stellen. Insbesondere kann die Wellenfrontkorrektur die Wellenfrontmessung der vorangehenden Scanning Position einbeziehen, was bei langsam veränderlichen Proben eine schnellere Konvergenz des Algorithmus möglich macht und so die Scanning-Geschwindigkeit noch weniger beeinträchtigt. Dazu wird eine Regeleinrichtung der adaptiven Optik derart gestaltet, dass eine Korrekturfunktion durch Vergleich der PSF des Abbildungsspots an einer Scanning-Position mit einer idealen $PSF_{ideal}$ ermittelt wird.

Eine Auswerteeinheit des Detektorarrays (z.B. 64 oder 81-Kanal-PMT-Array) bestimmt die PSF des Abbildungsspots ortsaufgelöst entsprechend der Auflösung des Detektorarrays.

Durch den Erhalt dieser, bisher nicht für einen Abbildungsspot verfügbaren Informationen ist es nun prinzipiell möglich, erstmals auch ortsabhängige (von der Scannereinstellung abhängige) Aberrationen zu detektieren und durch den Einsatz schneller adaptiver Optik zu korrigieren.

Aus dieser Information wird zumindest der Schwerpunkt der PSF bestimmt.

Aus der Schwerpunktlage kann beispielsweise auf eine Fokusabweichung in lateraler oder axialer Richtung geschlossen werden. Zusätzlich ist optional die Bestimmung von Abbildungsfehlern höherer Ordnung, wie Astigmatismus, Koma oder verschiedener Verzerrungen bzw. aberrationstypischer Symmetrieveränderung der PSF möglich.

Anschließend wird aus der PSF ein Wellenfrontkorrektursignal ermittelt und damit eine an sich bekannte adaptive Optik angesteuert, um die ermittelten Abweichungen in jeder Scanning-Position (on-the-fly) zu kompensieren.

Das Wellenfrontkorrektursignal wird in einer Vorwärtsschleife an die adaptive Optik übermittelt, um beispielsweise in einer benachbarten oder in der aktuellen Scanning-Position das Wellenfrontsignal zu beeinflussen.

Während die Scan-Optik scannt, wird die adaptive Optik zunächst mit dem Scan-Signal des Lasers der vorangegangenen Position angesteuert. Dabei lernt das System und die ermittelten Wellenfrontkorrektursignale werden in einer Look-Up-Tabelle vorzugsweise für jede Scan-Position gespeichert. Mit jedem Scan können dann die Korrekturdaten verfeinert und die Look-Up-Tabelle aktualisiert werden. Die Look-up Tabelle steht insbesondere auch für eine mögliche Nachbearbeitung (Entfaltung, engl. Deconvolution, zur Verfügung).

Das Wellenfrontkorrektursignal wird vorzugsweise derart getriggert, dass es bei jeweiliger Scan-Position entweder der Beleuchtung (NDD), der Detektions PSF (detection only) oder beidem aufgeprägt wird (common path), wodurch eine schrittweise Annäherung an eine nahezu störungsfreie PSF erfolgt.

An einer ersten Scanning-Position (n=1,m=1) wird aus der ortsaufgelösten PSF ein erster Wellenfrontfehler $W_{(1,1)}$ bestimmt. Dieser Wellenfrontfehler wird beispielsweise dargestellt als eine Summe von Zernike-Wellenfrontfehlern

$$W_{n,m} = \sum_i \left( A_{i;n,m} * Z_i \right),$$

mit

i = 4...25 für beispielsweise 25 Zernike-Polynome:
$Z_4$ = Defokus,
$Z_{5/6}$ Astigmatismus,
$Z_{7/8}$ Koma,
$Z_9$ sphärische Aberration,
$Z_{10/11}$ Dreiwelligkeit,
$Z_{12/13}$ höherer Astigmatismus,
$Z_{14/15}$ höhere Koma,
$Z_{16}$ höhere sphärische Aberration, ...)

und A(i;n,m) als die Amplitude des i-ten Zernike-Wellenfrontfehlers an der Scanning-Position (n,m). Das Signal an der ersten Scanning-Position muss bei den meisten Anwendungen nicht korrigiert werden, man "verzichtet" quasi auf diese Bildinformation.

Am der zweiten Scanning-Position n=2; m=1 wird mit dem Wellenfrontfehler $W_{(1,1)}$ korrigiert. Der reale Wellenfrontfehler $W_{(2,1)}$ weicht leicht vom eingestellten Korrekturwert ab. Die Differenz der gemessenen PSF an der Scanning-Position (2,1) wird verwendet, um einen besseren Wellenfront-Korrekturwert zu bestimmen. Die Amplituden $A_{i;n,m}$ sind langsam veränderliche Funktionen über die Scanning-Positionen (n,m). Der Feldverlauf der Amplituden kann üblicherweise durch niedrige Polynome dargestellt werden, z.B.

$$A_{i;n,m} = \sum_k B_{i,k} * F_k$$

mit Amplituden $B_{i,k}$ und Feldverlaufs-Basispolynomen $F_k$, wie z.B. $F_k$=2(x-1) für einen linearen Verlauf in x und konstant in y. Somit wird der Wellenfrontfehler in eine Doppel-Reihenentwicklung dargestellt:

$$W_{n,m} = \sum_i \sum_k \left( B_{i,k} * F_k \right) * Z_i$$

Damit kann man den wahrscheinlichen Wellenfrontfehler am nächsten Feldpunkt (n+1;m) oder (n,m+1) aus vorbekannten Messungen voraus berechnen und mit diesem vorausberechnetem Korrekturwert den adaptiven Spiegel ansteuern.

Im einfachsten Fall bestimmt man den Gradienten aus an zwei benachbarten Messpunkten berechneten Wellenfrontfehlern, um den Wellenfrontfehler am nächsten Feldpunkt durch lineare Extrapolation zu schätzen.

Nach mehreren Feldpunkten kann man auch höhere Feldverlaufspolynome mit hinzunehmen.

Selbstverständlich können mit den Detektoren alle bekannten Auswertungen vorgenommen werden.

Die Erfindung wird nachfolgend anhand der Figuren näher erläutert. Es zeigen:

Fig. 1: eine Schemadarstellung eines erfindungsgemäßen Super Resolution-Laserscanningmikroskops (SR-LSM);

Fig. 2: eine schematische Darstellung einer bevorzugten Ausführungsform des erfindungsgemäßen SR-LSM;

Fig. 3: eine abgewandelte Ausführungsform des in Fig. 2 gezeigten SR-LSM mit einem zuschaltbaren Relay mit adaptiver Optik;

Fig. 4: ortsaufgelöste PSF für verschiedene Aberrationen;

Fig. 5: schematische Darstellung eines Detektorarrays mit verschiedenen Messintensitäten von Einzeldetektoren.

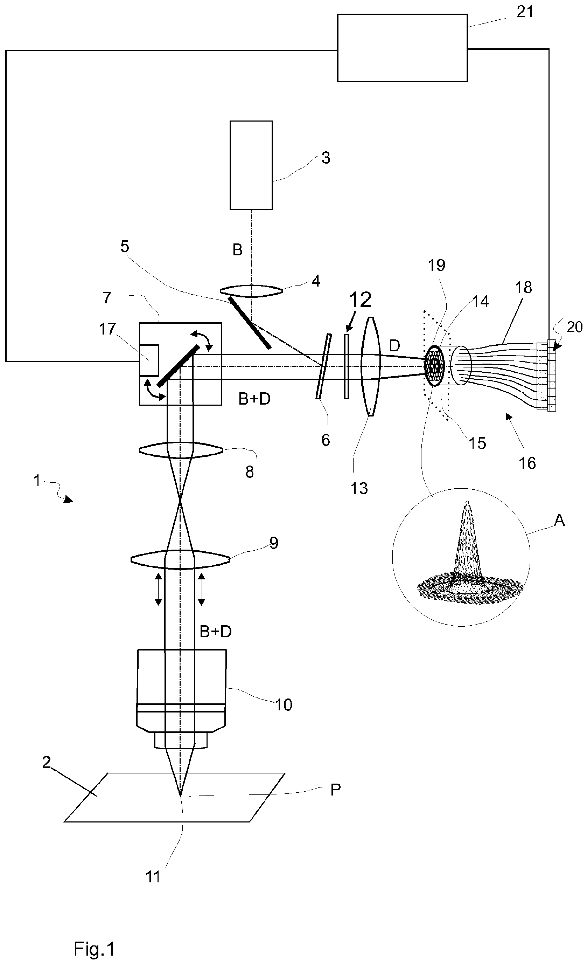

Fig. 1 zeigt schematisch ein Super Resolution-Laserscanningmikroskop 1 (nachfolgend SR-LSM abgekürzt), das zum Mikroskopieren einer in einem Probenträger 2 angeordneten Probe P ausgebildet ist. Das SR-LSM 1 wird von einem nicht dargestellten Steuergerät gesteuert und umfasst einen Beleuchtungsstrahlengang B und einen Abbildungsstrahlengang D. Der Beleuchtungsstrahlengang B beleuchtet einen Spot in der Probe P. Der Abbildungsstrahlengang D bildet in der Probe emittierte/reflektierte Strahlung beugungsbegrenzt in einem Abbildungsspot ab.

Das LSM 1 ist in an sich bekannter Weise aufgebaut: Ein Laser 3 wird über eine Optik 4 auf einen Spiegel 5 eingekoppelt. Über den Spiegel 5 wird der Laserstrahl B unter einem Reflexionswinkel auf einen Emissionsfilter 6 gelenkt, wo er reflektiert und auf einen Scanner 7 gelenkt wird. Der Scanner 7 sorgt für die scannende Bewegung des Laserstrahls B über die Probe P. Der Scanner 7 ist vorteilhafterweise mit einer adaptiven Optik 17 zur Wellenfrontmodulation ausgestattet. Die adaptive Optik 17 kann aber auch an anderer Stelle im Beleuchtungsstrahlengang B des LSM 1 integriert und in bekannter Weise aufgebaut sein.

Der Laserstrahl B wird mittels eines Scan-Objektivs 8 und einer Tubuslinse 9 durch ein Objektiv 10 in einen Spot 11 in der Probe P fokussiert.

Im Spot 11 angeregte Fluoreszenzstrahlung (Abbildungsstrahlengang D) gelangt über das Objektiv 10 und die Optiken 9, 8 wieder zum Scanner 7. In Abbildungsrichtung liegt dem Scanner 7 nachfolgend ein ruhender Lichtstrahl D vor. Emissionsfilter 6 und 12 sind in bekannter Weise im Abbildungsstrahlengang D angeordnet, um die Fluoreszenzstrahlung vom Spot 11 hinsichtlich ihrer Wellenlänge zu selektieren. Eine Optik 13 sorgt dafür, dass der Spot 11 als Abbildungsspot 14 (zweidimensionales Airy-Scheibchen) in einer Detektionsebene 15 in bestimmter Größe abgebildet wird. Die Detektionsebene 15 ist eine konjugierte Ebene bzw. Pupillenebene zur Ebene des Spots 11. Ein Detektor 16 erfasst den Abbildungsspot 14 orts- und intensitätsaufgelöst.

Ein nicht dargestelltes Steuergerät steuert alle Komponenten des LSM 1, insbesondere Scanner 7, Detektor 16 und adaptive Optik 17.

Der Detektor 16 umfasst in der dargestellten Ausführungsform eine Faseroptik als nichtabbildendes optisches Umverteilungselement , insbesondere ein Bündel aus Lichtleitfasern 18. Jede einzelne der Lichtleitfasern 18 stellt hierbei ein Pixel des Abbildungsspots 14 dar. Ein Eingang 19 des Bündels ist in der Detektionsebene 15 angeordnet. Dabei sind die Lichtleitfasern 18 eng aneinander gedrängt angeordnet bzw. gepackt, so dass ein kreisähnliche oder nahezu kreisförmige Struktur entsteht, welche den Abbildungsspot 14 komplett erfassen kann.

Die ausgangsseitigen Enden der Lichtleitfasern 18 sind als Ausgang mit den Eingängen eines Detektorarrays 20 verbunden. Die Verbindung kann fest oder lösbar beispielsweise mit einem Stecker realisiert sein. Das Detektorarray 20 umfasst in dieser Ausführungsform Fotomultiplier-Röhren (PMT's), oder auch Avalanche-Fotodioden (APD's) in einer solchen Anzahl, wie Pixel in der Detektionsebene 15 benötigt werden. Die PMT's arbeiten ausreichend schnell, um die mit ihnen erfassten Daten in ein- und demselben Scan-Schritt verarbeiten zu können.

Ein besonderer Vorteil dieser Anordnung besteht darin, dass das Detektorarray 20, das bauraumtechnisch größer ist, als der Querschnitt des Eingangs 19 des Umverteilungselementes bzw. der Faseroptik, außerhalb der Detektionsebene 15 angeordnet sein kann und auch eine beliebige Form/Anordnung der einzelnen Röhren bzw. Elemente haben kann, je nach verfügbarem Bauraum. Wollte man das Detektorarray 20 direkt in der Abbildungsebene verwenden, so müsste der Abbildungsspot auf die Größe des Detektorarrays entsprechend aufgeweitet werden, was technisch oftmals ein Problem darstellt.

Dem Detektorarray 20 ist eine Auswerteeinheit 21 nachgeschaltet, in welcher die orts- und intensitätsaufgelösten Daten des Detektorarrays 20 ausgewertet und verarbeitet werden. Dabei werden zweidimensional ortsaufgelöste Airy-Scheibchen erfasst, welche eine PSF für eine Fokusposition repräsentieren. Dabei wird in jedem Pixel des Detektors die Lichtmenge eines Teils des Airy-Scheibchens detektiert. Mit dem Detektorarray 20 können also Strahlungsintensitäten ortsaufgelöst erfasst werden, wie dies in Detail A (Quelle Wikipedia: point spread function) angedeutet ist.

Durch die Kenntnis der PSF für verschiedene Aberrationen erster und höherer Ordnung ist es durch eine Polynombestimmung möglich, die Art und das Ausmaß der vorliegenden Aberration zu berechnen und diese durch eine Regelschleife herauszurechnen. Der Fachmann kennt die hierfür erforderlichen Berechnungen und kann entsprechende Regelroutinen und Auswerteroutinen implementieren. Bei der Bestimmung eines Grauwertes aus der detektierten Gesamtlichtmenge für das endgültige Bildpixel des Mikroskopbildes können diese Aberrationen berücksichtigt werden. Ggf. liefern die Airy-Scheibchen weitere Informationen in Subpixelbereich, die für die im Mikroskopbild benachbarten Pixel von Bedeutung sein können und dort entsprechend berücksichtigt werden.

Die Auswerteeinheit 21 liefert also Pixeldaten an eine nicht dargestellte Bildverarbeitungseinheit. Zusätzlich werden die Daten der Auswerteeinheit 21 mit einer idealen PSF (Detail A) verglichen und die resultierende Korrekturwellenfront der Ansteuerung der adaptiven Optik 17 zugeführt, um an der nächsten Scan-Position zur on-the-fly Bildkorrektur verwendet zu werden.

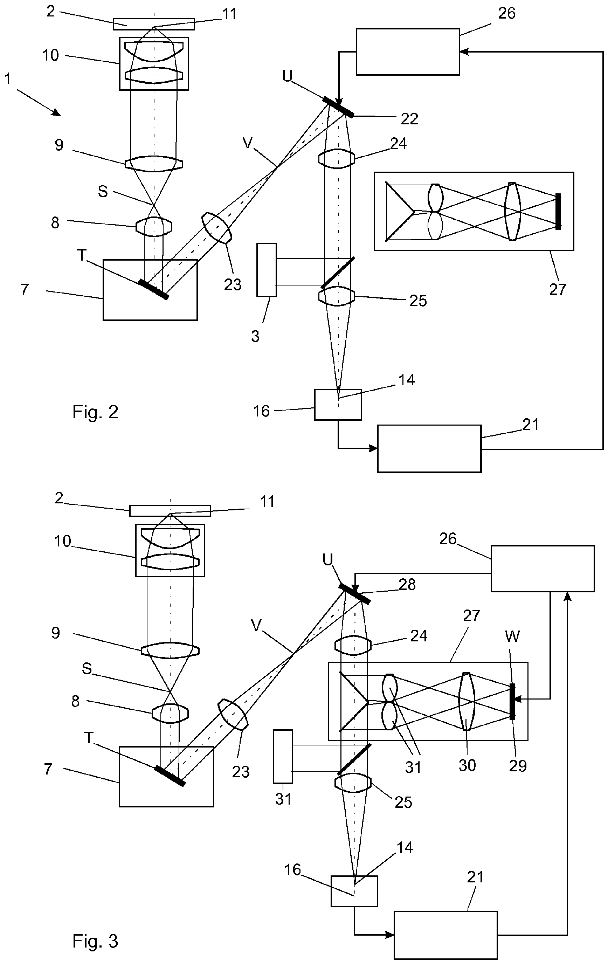

In Fig. 2 ist eine bevorzugte Ausführungsform des SR-LSM schematisch dargestellt, bei der eine separate adaptive Optik vorhanden ist. Das Mikroskop 1 dient in der oben beschriebenen Weise zur Abbildung der Probe P, welche im Probenhalter 2 angeordnet ist, auf den konfokalen Detektor 16. Der Detektor 16 ist wie in der vorherigen Abbildung beschrieben aufgebaut und mit einem nicht dargestellten optischen Umverteilungselement ausgestattet.

Die Beleuchtung der Probe erfolgt ebenfalls in bekannter Weise über die Laserquelle 3, welche mit einem adaptiven Spiegel 22 in fokaler und lateraler Lage, sowie zur Korrektur von Aberrationen beeinflussbar und mittels des Scanners 7 über die Probe bewegbar ist. Die Abbildung erfolgt in bekannter Weise über das Objektiv 10 und die Tubuslinse 9 in ein Zwischenbild S. Von dort geht das Licht weiter über das Scan-Objektiv 8 in eine konjugierte Pupillenebene T, in der der Scanner 7 angeordnet ist. Über eine erste Relay-Optik 23 wird eine zweite Pupillenebene U erzeugt, in der der adaptive Spiegel 22 angeordnet ist.

Zwischen der konjugierten Pupillenebene U und einer ersten Relayoptik 23 entsteht eine weitere konjugierte Pupillenebene bzw. ein Zwischenbild V. Über zweite Relay-Linsen 24, 25 wird das Zwischenbild in der in Fig. 1 beschriebenen Weise auf den Detektor 16 abgebildet. Dieser liefert ein Signal an die Auswerteeinheit 21. Aus der hier ermittelten ortsaufgelösten PSF wird ein Korrektursignal ermittelt, welches einer Regeleinrichtung 26 zur Regelung des adaptiven Spiegels 22 zugeführt wird, womit die Wellenfront des Beleuchtungsstrahlenganges beeinflusst wird.

Eine optional zuschaltbare Relay-Optik 27 mit adaptiver Optik kann vorgesehen sein.

Fig. 3 zeigt eine weitere Ausführungsform eines erfindungsgemäßen SR-LSM 1 in schematischer Darstellung mit einer zweiten (zusätzlichen) adaptiven Optik. Das SR-LSM 1 hat den gleichen prinzipiellen Aufbau, wie das zuvor beschriebene. Gleiche Bezugsziffern bedeuten gleiche Bauteile. Auf eine nochmalige Beschreibung dieser Teile wird daher hier verzichtet. Das SR-LSM 1 umfasst in der Pupillenebene U dabei einen zweiten Scanspiegel 28, der (optional) ebenfalls als adaptiver Spiegel ausgeführt ist. Die zweite Relay-Optik 27 ist als zuschaltbares Relay mit einem zweiten adaptiven Spiegel 29 in einer dritten konjugierten Pupille W angeordnet. Diese zweite Relay-Optik 27 umfasst eine gemeinsam genutzte Optik 30 und getrennte Optiken 31. Der Fachmann kennt den Aufbau solcher Optiken, so das hier auf eine ausführliche Beschreibung verzichtet wird.

Der adaptive Spiegel 22, 28, 29 ist vorzugsweise ein deformierbarer Spiegel, dessen Deformation so eingestellt werden kann, dass ein vorliegender Wellenfrontfehler ausgeglichen wird. Das System kann auch so ausgelegt sein, dass beispielsweise der erste adaptive Spiegel 22, 28 ein schnell deformierbarer Spiegel zur Veränderung von Fokusposition und sphärischer Aberration ist, während der zweite deformierbare Spiegel 29 zur Korrektur von nicht rotationssymmetrischen Wellenfrontfehlern wie Koma oder Astigmatismus ist. Je nach Ausstattungsvariante ist damit eine modulare Systemerweiterung realisierbar.

In der Auswerteeinheit 21 wird ein Detektorsignal einer ersten Scanposition analysiert und eine erste Wellenfrontdeformation ermittelt, beispielsweise durch Raten. Aus der Kenntnis eines idealen Wellenfrontsignals kann ein Korrektursignal ermittelt werden, welches der Regeleinrichtung 26 zugeführt wird. Der oder ggf. die adaptiven Spiegel 22, 28, 29 werden für eine zweite Scanning-Position mit dem Korrektursignal angesteuert. Am Detektor 16 wird nun das Signal bzw. das Abbild des PSF für die zweite Scanning-Position empfangen und mit dem ersten Detektorsignal oder der idealen PFS verglichen. Ausgehend von dem Signal der zweiten Scanning-Position kann eine neue Wellenfrontdeformation und das zugehörige Korrektursignal ermittelt und der adaptive Spiegel damit für die folgenden Scanning-Position angesteuert werden. Dieser iterative Prozess konvergiert in der Regel sehr schnell. Es ist zu erwarten, dass nach drei bis acht Zyklen das Detektorsignal der idealen PSF nahezu entspricht.

Der iterative Prozess kann erfolgen, während der Scanner 7 für die nächste Scanning-Position angesteuert wird. Benachbarte Scanning-Positionen in der Probe haben in der Regel sehr ähnliche Wellenfrontfehler. Die Regeleinrichtung 26 für den/die adaptiven Spiegel 22, 28, 29 kann mit dem Signalgeber für den Scanspiegel 7 gekoppelt werden.

Nach der Bestimmung der ersten Wellenfrontkorrektur an einer ersten Scanning-Position fährt der Scanspiegel 7 eine benachbarte, zweite Scanning-Position an. Zur Korrektur wird die Wellenfrontdeformationen der ersten Scanning-Position eingestellt. Basierend auf der Messung an der aktuellen, zweiten Scanning-Position ermittelt der Signalgeber eine neue, zweite Wellenfrontkorrektur, die auf eine benachbarte, dritte Scanning-Position angewendet wird. Daher "hinkt" beim schnellen Messen die Wellenfrontkorrektur der idealen Korrektur leicht hinterher.

Die den Scanning-Positionen zugeordneten Wellenfrontkorrekturen können in einer Tabelle als Korrekturkoeffizienten gespeichert werden, so dass bei weiteren Messungen an derselben bzw. ähnlichen Proben die Wellenfrontdeformationen nicht erneut ermittelt werden müssen bzw. ein naheliegender Startpunkt für die Optimierung vorliegt.

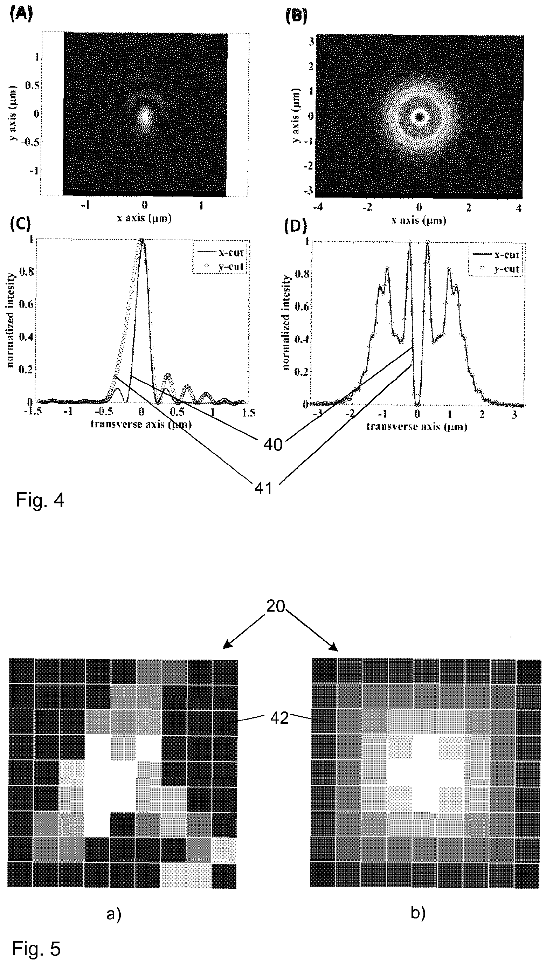

Fig. 4 zeigt zwei Beispiele für ortsaufgelöste Aufnahmen einer PSF (Abb. A und B) und zugehörige Intensitätsverteilungen für verschiedene Aberrationen (Abb. C und D). Aus den Abbildungen ist ersichtlich, wie sich unterschiedliche Aberrationen aufgrund ihrer Symmetrien an der Form der Einhüllenden der PSF erkennen lassen. In Abbildung A ist eine PSF mit dem Abbildungsfehler Koma, in Abbildung B eine PSF mit dem Abbildungsfehler Defokus dargestellt.

Abbildungen B und C zeigen Intensitätsverläufe des Sensorsignals für einen Schnitt in der X-Achse als durchgezogene Kurve 40 und als gepunktete Darstellung 41 für einen Schnitt durch die y-Achse.

In Abbildung C ist deutlich ein Symmetrieunterschied zwischen den Achsenschnitten 40, 41 zu erkennen. In Abbildung D ist zu erkennen, dass große Intensitäten achsensymmetrisch, aber zentrumsentfernt vorliegen.

Für eine detaillierte Auswertung könnten alle möglichen (natürlich auch dezentrale) Schnitte durch die Abbildung der PSF vorgenommen und ausgewertet werden, um auch Aberrationen höherer Ordnung zu detektieren und entsprechend auszugleichen.

Fig. 5 zeigt beispielhaft, wie ein Abbildungsspot 14 als PSF ortsaufgelöst mit einem beispielsweise aus 9x9 Einzeldetektoren 42 aufgebauten Detektorarray 20 detektiert wird. Unterschiedliche Grauwerte stellen dabei unterschiedliche Messintensitäten der Einzelsensoren dar. In Abbildung a) ist deutlich eine nicht rotationssymmetrische Aberration zu erkennen, während Abb. b eine nahezu ideale PSF zeigt.

Bezugszeichenliste

| | | | | |
|---|---|---|---|---|
| 1 | SR-LSM: Super Resolution Laserscanningmikroskop | | 40 | Achsenschnitt |
| | | | 41 | Achsenschnitt |
| 2 | Probenhalter | | 42 | Einzeldetektor |
| 3 | Laser | | P | Probe |
| 4 | Optik | | B | Beleuchtungsstrahlengang |
| 5 | Spiegel | | | |
| 6 | Emissionsfilter | | D | Abbildungsstrahlengang |
| 7 | Scanner | | | |
| 8 | Scan-Objektiv | | S | Zwischenbild |
| 9 | Tubuslinse | | T, U, V | Pupillenebenen |
| 10 | Objektiv | | | |
| 11 | Spot | | | |
| 12 | Emissionsfilter | | | |
| 13 | Optik | | | |
| 14 | Abbildungsspot | | | |
| 15 | Detektionsebene | | | |
| 16 | Detektor | | | |
| 17 | adaptive Optik | | | |
| 18 | Lichtleitfasern | | | |
| 19 | Eingang | | | |
| 20 | Detektorarray | | | |
| 21 | Auswerteeinheit | | | |
| 22 | adaptiver SpiegelRelay-Optik | | | |
| 24 | Relay-Linse | | | |
| 25 | Relay-Linse | | | |
| 26 | Regeleinrichtung | | | |
| 27 | Relay-Optik | | | |
| 28 | Scan-Spiegel | | | |
| 29 | adaptiver Spiegel | | | |
| 30 | Optik | | | |
| 31 | Optik | | | |

**Patentansprüche**

1. Laserscanningmikroskop (1) mit

   - einer Beleuchtungseinrichtung (3) zur Bereitstellung eines Beleuchtungsspots (11);
   - einem Scanner (7) zum Bewegen des Beleuchtungsspots (11) über eine zu untersuchende Probe (P) an aufeinanderfolgenden Scanning-Positionen in x-y-Richtung, wobei jede Scanning Position einem Feldpunkt der zu untersuchenden Probe entspricht;
   - einer adaptiven Optik (17, 22, 28, 29) zur Beeinflussung einer Wellenfront des Beleuchtungsspots (11) mit einer Regeleinrichtung (26);
   - einem Detektor (16) zur Erfassung eines von der Probe (P) emittierten ortsaufgelösten Abbildungsspots (14);

   **dadurch gekennzeichnet, dass**
   es eine Auswerteeinheit (21) zur Bestimmung einer Point-Spread-Funktion (PSF) des Abbildungsspots (14) in jeder Scanning-Position umfasst, wobei ein aus der Point-Spread-Funktion (PSF) einer vorangegangenen oder benachbarten oder der aktuellen Scanning-Position ermitteltes Wellenfrontkorrektursignal einer Regeleinrichtung (26) der adaptiven Optik zugeführt wird.

2. Laserscanningmikroskop (1) nach Anspruch 1, **dadurch gekennzeichnet, dass** der Detektor (16) ein Detektorarray (20) aus mindestens vier Einzeldetektoren und ein nichtabbildendes Umverteilungselement umfasst, wobei ein Eingang (19) des Umverteilungselementes in einer Detektionsebene (15) angeordnet ist und das Umverteilungselement die Strahlung aus der Detektionsebene (15) auf die Einzeldetektoren verteilt.

3. Laserscanningmikroskop (1) nach Anspruch 2, **dadurch gekennzeichnet, dass** das Umverteilungselement ein Bündel aus Lichtleifasern (18) umfasst, wobei die Lichtleitfasern (18) am Eingang (19) kreisförmig gebündelt sind und an einem den Einzeldetektoren zugewandten Ausgang eine vom Eingang (19) verschiedene geometrische Anordnung haben.

4. Laserscanningmikroskop (1) nach Anspruch 2, **dadurch gekennzeichnet, dass** das Umverteilungselement mindestens ein Mikrospiegelarray mit unterschiedlich neigbaren Mikrospiegeln umfasst.

5. Laserscanningmikroskop (1) nach einem der Ansprüche 1 bis 4, **dadurch gekennzeichnet, dass** der Detektor (16) ein Array aus Avalanche-Fotodioden oder Fotomultiplier-Röhren ist.

6. Verfahren zur Korrektur von Abbildungsfehlern bei einer Laser-Scanning-Mikroskopie, folgende Schritte umfassend:

   - Bewegen eines Beleuchtungsspots (11) über eine zu untersuchende Probe (P) an aufeinanderfolgenden Scanning-Positionen in x-y-Richtung, wobei jede Scanning Position einem Feldpunkt der zu untersuchenden Probe entspricht;
   - Erfassen eines ortsaufgelösten Abbildungsspots (14) in jeder Scanning-Position; **gekennzeichnet durch**:

      - Bestimmen einer $PSF_{Abb}$ des Abbildungsspots (14);
      - Ermitteln von Abweichungen zwischen einer $PSF_{ideal}$ und der $PSF_{Abb}$ und Berechnen eines Wellenfrontkorrektursignals.

7. Verfahren nach Anspruch 6, **dadurch gekennzeichnet, dass** einer adaptiven Optik mit dem Wellenfrontkorrektursignal für jede Scanning-Position oder unter Verwendung des Wellenfrontkorrektursignals einer benachbarten Scanning-Position angesteuert wird.

8. Verfahren nach Anspruch 6 oder 7, **dadurch gekennzeichnet, dass** die Schritte unter Aufsummierung der Scanning-Positionen wiederholt werden, wobei bei jeder Wiederholung ein Korrekturkoeffizient in einer Look-Up-Tabelle gespeichert wird.

9. Verfahren nach einem der Ansprüche 6 bis 8, **dadurch gekennzeichnet, dass** das Wellenfrontkorrektursignal in ein erstes Wellenfrontkorrektursignal und ein zweites Wellenfrontkorrektursignal aufgeteilt wird, wobei das erste Wellenfrontkorrektursignal Informationen über eine rotationssymmetrische Korrektur umfasst und zur Ansteuerung einer ersten adaptiven Optik dient und das zweite Wellenfrontkorrektursignal Informationen über eine nicht rotationssymmetrische Korrektur umfasst und zur Ansteuerung einer zweiten adaptiven Optik dient.

10. Verfahren nach einem der Ansprüche 6 bis 9, **dadurch gekennzeichnet, dass** für jede Scanning-Position der in einem Einzelbild erfasste Abbildungsspot (14) mit einer Ortsauflösung erfasst wird, welche unter Berücksichtigung des Abbildungsmaßstabes mindestens doppelt so groß ist, wie eine Halbwertsbreite des beugungsbegrenzten Einzelbildes.

11. Verfahren nach einem der Ansprüche 6 bis 10, **dadurch gekennzeichnet, dass** die Ermittlung der $PSF_{Abb}$ des Abbildungsspots (14) durch Auswertung von Messintensitäten von Einzeldetektoren (42) eines Detektorarrays (20) erfolgt, wobei die Positionen der Einzeldetektoren im Detektorarray (20) Pixeln und die Messintensitäten Grauwerten im ortsaufgelösten Abbildungsspot zugeordnet werden.

12. Verfahren nach Anspruch 6, **dadurch gekennzeichnet, dass** das Wellenfronkorrektursignal für jede Scanning-Position in einer digitalen Nachbearbeitung eines Mikroskopbildes berücksichtigt wird.

**Claims**

1. Laser scanning microscope (1) comprising

   - an illumination apparatus (3) for providing an illumination spot (11);

- a scanner (7) for moving the illumination spot (11) over a sample (P) to be examined to consecutive scanning positions in the x-y direction, wherein each scanning position corresponds to a field point of the sample to be examined;
- an adaptive optical unit (17, 22, 28, 29) for influencing a wavefront of the illumination spot (11) with a control apparatus (26);
- a detector (16) for capturing a spatially-resolved imaging spot (14) emitted by the sample (P);

**characterized in that**

it comprises an evaluation unit (21) for determining a point spread function (PSF) of the imaging spot (14) in each scanning position, wherein a wavefront correction signal, calculated from the point spread function (PSF) of a preceding or an adjacent or the current scanning position, is supplied to the control apparatus (26) of the adaptive optical unit.

2. Laser scanning microscope (1) according to Claim 1, **characterized in that** the detector (16) comprises a detector array (20) of at least four individual detectors and one non-imaging redistribution element, wherein one input (19) of the redistribution element is arranged in a detection plane (15) and the redistribution element distributes the radiation from the detection plane (15) over the individual detectors.

3. Laser scanning microscope (1) according to Claim 2, **characterized in that** the redistribution element comprises a bundle of optical fibres (18), wherein the optical fibres (18) are bundled in a circular shape at the input (19) and have a geometric arrangement at an output facing the individual detectors which differs from that of the input (19).

4. Laser scanning microscope (1) according to Claim 2, **characterized in that** the redistribution element comprises at least one micromirror array with differently inclinable micromirrors.

5. Laser scanning microscope (1) according to one of Claims 1 to 4, **characterized in that** the detector (16) is an array of avalanche photodiodes or photomultiplier tubes.

6. Method for correcting imaging aberrations in laser scanning microscopy, comprising the following steps:

   - moving an illumination spot (11) over a sample (P) to be examined to consecutive scanning positions in the x-y direction, wherein each scanning position corresponds to a field point of the sample to be examined;
   - capturing a spatially-resolved imaging spot (14) in each scanning position;
   - **characterized by**:

      - determining a $PSF_{Abb}$ of the imaging spot (14);
      - ascertaining differences between a $PSF_{ideal}$ and the $PSF_{Abb}$ and computing a wavefront correction signal.

7. Method according to Claim 6, **characterized in that** an adaptive optical unit is controlled with the wavefront correction signal for each scanning position or using the wavefront correction signal of an adjacent scanning position.

8. Method according to Claim 6 or 7, **characterized in that** the steps are repeated under summation of the scanning positions, wherein, during each repetition, a correction coefficient is saved in a look-up table.

9. Method according to one of Claims 6 to 8, **characterized in that** the wavefront correction signal is split into a first wavefront correction signal and a second wavefront correction signal, wherein the first wavefront correction signal comprises information about a rotationally-symmetric correction and provides for controlling a first adaptive optical unit and the second wavefront correction signal comprises information about a non-rotationally-symmetric correction and provides for controlling of a second adaptive optical unit.

10. Method according to one of Claims 6 to 9, **characterized in that** the imaging spot (14) captured in an individual image is captured with a spatial resolution for each scanning position, which spatial resolution in consideration of the imaging scale is at least twice as large as a full width at half maximum of the diffraction-limited individual image.

11. Method according to one of Claims 6 to 10, **characterized in that** $PSF_{Abb}$ of the imaging spot (14) is calculated by evaluating the measurement intensities of the individual detectors (42) of a detector array (20), wherein the positions of the individual detectors in the detector array (20) are assigned pixels and the measurement intensities are assigned greyscale values in the spatially-resolved imaging spot.

**12.** Method according to Claim 6, **characterized in that** the wavefront correction signal for each scanning position is considered in digital post-processing of a microscope image.

**Revendications**

**1.** Microscope à balayage laser (1) comprenant

- un dispositif d'éclairage (3) destiné à fournir un spot d'éclairage (11) ;
- un scanner (7) destiné à déplacer le spot d'éclairage (11) au-dessus d'un échantillon (P) à examiner à des positions de balayage successives dans la direction x-y, chaque position de balayage correspondant à un point de champ de l'échantillon à examiner ;
- une optique adaptative (17, 22, 28, 29) destinée à influer sur un front d'onde du spot d'éclairage (11) à l'aide d'un dispositif de réglage (26) ;
- un détecteur (16) destiné à détecter un spot d'imagerie à résolution local (14) émis par l'échantillon (P) ;

**caractérisé en ce que**
il comprend une unité d'évaluation (21) destinée à déterminer une fonction d'étalement ponctuel (PSF) du spot d'imagerie (14) dans chaque position de balayage, un signal de correction de front d'onde déterminé à partir de la fonction d'étalement ponctuel (PSF) d'une position de balayage précédente ou adjacente ou actuelle étant amené au dispositif de réglage (26) de l'optique adaptative.

**2.** Microscope à balayage laser (1) selon la revendication 1, **caractérisé en ce que** le détecteur (16) comprend un réseau de détecteurs (20) comprenant au moins quatre détecteurs individuels et un élément de redistribution non-imageur, une entrée (19) de l'élément de redistribution étant disposée dans un plan de détection (15) et l'élément de redistribution distribuant le rayonnement provenant du plan de détection (15) sur les détecteurs individuels.

**3.** Microscope à balayage laser (1) selon la revendication 2, **caractérisé en ce que** l'élément de redistribution comprend un faisceau de fibres optiques (18), les fibres optiques (18) étant regroupées en cercle à l'entrée (19) et présentant, à une sortie tournée vers les détecteurs individuels, un agencement géométrique différent de celui à l'entrée (19).

**4.** Microscope à balayage laser (1) selon la revendication 2, **caractérisé en ce que** l'élément de redistribution comprend au moins un réseau de micro-miroirs comprenant des micro-miroirs pouvant être inclinés différemment.

**5.** Microscope à balayage laser (1) selon l'une des revendications 1 à 4, **caractérisé en ce que** le détecteur (16) est un réseau de photodiodes à avalanche ou de tubes photomultiplicateurs.

**6.** Procédé de correction d'erreurs d'imagerie dans une microscopie à balayage laser, le procédé comprenant les étapes suivantes :

- déplacer un spot d'éclairage (11) au-dessus d'un échantillon (P) à examiner à des positions de balayage successives dans la direction x-y, chaque position de balayage correspondant à un point de champ de l'échantillon à examiner ;
- détecter un spot d'imagerie (14) à résolution locale à chaque position de balayage ;

**caractérisé par** :

- la détermination d'un $PSF_{Imagerie}$ du spot d'imagerie (14) ;
- la détermination d'écarts entre un $PSF_{idéal}$ et le $PSF_{Imagerie}$ et le calcul d'un signal de correction de front d'onde.

**7.** Procédé selon la revendication 6, **caractérisé en ce qu'**une optique adaptative est commandée avec le signal de correction de front d'onde pour chaque position de balayage ou à l'aide du signal de correction de front d'onde d'une position de balayage adjacente.

**8.** Procédé selon la revendication 6 ou 7, **caractérisé en ce que** les étapes sont répétées avec addition des positions de balayage, un coefficient de correction étant mémorisé dans une table de consultation à chaque répétition.

**9.** Procédé selon l'une des revendications 6 à 8, **caractérisé en ce que** le signal de correction de front d'onde est divisé en un premier signal de correction de front d'onde et un deuxième signal de correction de front d'onde, le premier signal de correction de front d'onde comprenant des informations sur une correction à symétrie de révolution et étant utilisé pour commander une première optique adaptative et le deuxième signal de correction de front d'onde comprenant des informations sur une correction sans symétrie de révolution et étant utilisé pour commander une deuxième optique adaptative.

10. Procédé selon l'une des revendications 6 à 9, **caractérisé en ce que**, pour chaque position de balayage, le point d'imagerie (14) détecté dans une image individuelle est capturé avec une résolution locale qui, compte tenu de l'échelle d'imagerie, est au moins deux fois plus grande qu'une demi-largeur de l'image individuelle limitée par diffraction.

11. Procédé selon l'une des revendications 6 à 10, **caractérisé en ce que** le $PSF_{Imagerie}$ du spot d'imagerie (14) est déterminé par évaluation d'intensités de mesure de détecteurs individuels (42) d'un réseau de détecteurs (20), les positions des détecteurs individuels dans le réseau de détecteurs (20) étant associées à des pixels et les intensités de mesure étant associées à des valeurs de gris dans le spot d'imagerie à résolution locale.

12. Procédé selon la revendication 6, **caractérisé en ce que** le signal de correction de front d'onde est pris en compte pour chaque position de balayage dans un post-traitement numérique d'une image de microscope.

Fig.1

Fig. 2

Fig. 3

Fig. 4

a)                                    b)

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2317362 A1
- EP 1253457 B1
- US 722423 B2
- JP 2008026643 A
- US 20040223214 A1
- DE 102012204128 A1

**In der Beschreibung aufgeführte Nicht-Patentliteratur**

- **IZEDDIN.** PSF shaping using adaptive optics for three dimensional single-molecule super-resolution imaging and tracking. *OPTICS EXPRESS,* 01. Januar 2012, vol. 20 (5
- **BOOTH ; 1. JANUAR 2012.** Adaptive Optics for Biomedical Microscopy. *OPN Optics and Photonics News,* 22-29
- **DEBARRE.** Image-based adaptive optics for two-photon microscopy. *Optics Letters,* 15. August 2009, vol. 34 (16), 2495-2497